# EUROPEAN PATENT APPLICATION

(11) **EP 3 392 793 A1**
(43) Date of publication of application: **24.10.2018**
(21) Application number: 18167923.4
(22) Date of filing: 18.04.2018
(51) Int. Cl.: G06F 21/64, H04L 9/32

(54) **DIGITAL SIGNATURE METHOD**

(30) Priority: 19.04.2017 FI 20175356
(71) Applicant: Avaintec Oy, 00180 Helsinki (FI)
(72) Inventor: Vento, Jere, 00640 Helsinki (FI); Sulonen, Petteri, 00530 Helsinki (FI); Akgül, Cagri, 00670 Helsinki (FI); Lång, Jan-Henrik, 02330 Espoo (FI)
(74) Representative: Salomäki, Juha Kari Ensio

(57) **Abstract**

The object of the invention is a digital signature method, wherein a person signing digitally signs a document, aided by an information system, and a video clip of the signatory in the signing event is recorded.

## Description

The object of the invention is a digital signature method as defined in the preamble of claim 1.

In the digital signature method according to the invention, a short video clip of the signatory in a digital signing event is recorded, which video clip is linked to a signed document. By means of the video clip, it can be verified from the digitally signed document that the signatory was the correct person owning that signature.

One of the most common problems in digitally signed contracts/documents is that later the signatory does not confess to ever having signed the agreement and consequently cancels e.g. a contract for a mobile phone subscription that was made with a digital signature. A signatory can cite many different reasons why he/she has not signed an agreement. He/she can claim, for example, that someone has misused his/her bank codes. With digital signing methods according to modern technology, it is difficult for an operator to prove categorically that the signatory was the correct person.

According to what is known in the art, the method generally used in a digital (electronic) signing process means that an employee of a company sends a document to the signatory by adding the name and email address of the recipient as well as the document, such as a PDF file, to be signed, to an electronic signature service. The signatory receives the signature request in his/her email, from where he/she navigates to identification and the signing of the document. When the document has been signed, the company employee receives a notification of the new signed document in his/her email and he/she can save the document and the digital signature from the service. A digital signature can possibly also be included in a document file.

In these digital signature solutions according to prior art it has not been possible to categorically verify that exactly the correct person would have signed the document, or stronger identification mechanisms are expensive and have poor usability.

One of the most commonly used solutions is signing on the face of an electronic pad, which method is used by, *inter alia,* Finland Post when a person fetches a parcel addressed to him/her. In this case the Post employee performs identification of a person conventionally from official identity papers, such as a driving license, and the person enters an acknowledgement marking on the face of the pad. This acknowledgement marking, however, has no function associated with identifying the person.

Another very widely used solution is email/based identification, which is based on trusting that the email recipient is the correct person to sign. In such a case, a prompt is sent by email to the signatory to go and sign a document e.g. on the website of a service provider offering a signature service. The signatory signs the document with a general digital signature method, such as public key encryption (PKI). This method verifies that the signed document has not been altered, but it does not verify who actually opened the document and signed it. One danger is that the signature refers to an identity that was already forged for the verification or a person has stolen or obtained the email password of the correct signatory and also the secret key used in the PKI method.

Generally, also electronic identification methods have been taken into use in conjunction with digital signatures. In these methods, a person logs into a service e.g. with a bank code issued by banks, with a mobile identifier issued by a telecoms provider or with a certificate issued by Finland's Population Register Centre. There are corresponding services in different countries, but there are no global solutions at all, not even an EU-wide solution. These identification solutions offer stronger identification of a person than before compared to the solutions presented in the preceding, but a problem also in these solutions is that the codes and passwords or identifier cards can be stolen, after which they can appear with the wrong identity.

A problem in all the computer-based solutions presented above is also that, in order to function, the system requires a reliable information system with data security that has not been breached. There must not, therefore, be any malware on the user's computer that could hijack the user's password or PIN code, copy secret keys and even make unauthorized signatures in the name of the correct owner of the identity.

Solutions relating to biometric identification are also known in the art. These solutions are, *inter alia,* fingerprint recognition, iris recognition, face recognition, palm print recognition or voice recognition. A problem with all of these is that they try to achieve the same as e.g. bank codes, i.e. they endeavor to create a digital identity and to deduce by means of an identifier who the person in question is. In other words, it is deemed possible to create a digital identity, i.e. the stamp of a trust service, by means of the identifiers in question. The methods in question are very burdensome and expensive to implement because they all require for support a reliable third party to maintain a database/bank that compares the biometric identification data received to the data in the database/bank and to verify to which person the identification data belongs. Counterfeiting the biometric identifiers of other people is also possible and, using modern technology, also easy. For example, the copying of a fingerprint by means of a digital image or modeling clay is fairly easy.

Attempts have been made to develop a solution for the aforementioned problems by means of video technology. United States patent specification no. US 2003/0070072 A1 discloses, *inter alia,* one solution in which videoconferencing technology is utilized. A problem in the invention in question is e.g. that when verifying identity via a videoconference, a representative of the counterparty must also be present live at the time of signing. In addition, in this solution a video recording, which can afterwards be regarded as evidence of the correct signatory, is not made.

The aim of the present invention is to eliminate the aforementioned drawbacks and to provide a simple, inexpensive and reliable digital signature method. The digital signature method according to the invention is characterized by what is disclosed in the characterization part of claim 1. Other embodiments of the invention are characterized by what is disclosed in the other claims.

In the digital signature method according to the invention, wherein a person signing digitally signs a document, aided by an information system, a video clip of the signatory in the signing event is recorded.

One substantial advantage, among others, of the solution according to the invention is that in the signing event unambiguous proof of the correct signatory remains on the video clip, which proof is securely attached to the signed document. By means of this, the recipient of the signed document can verify that the signatory was the correct person and also afterwards can prove that the person in question himself/herself signed the document at the time in question. Another advantage is an inexpensive and simple arrangement for verifying a signatory, for which e.g. biometric personal databases managed by third parties are not needed.

Another advantage also is that when recording a short video clip, the information system can request the signatory to repeat a certain verification procedure, such as to express a certain word or code on the video clip, e.g. aloud or in writing. With this additional checking step, it can be ensured that in the signing event the signatory is not able to use a video clip made beforehand.

Another advantage also is that the video clip can be attached to the digital signature in such a way that the signature remains intact only if both the video clip and the document are unchanged. This way it can be ensured that the signed document and the video clip are always originals. A hash code is made of the video clip, the code being linked to the content of the digital signature utilizing block chain technology.

In the following, the invention will be described in greater detail by the aid of some embodiments and by referring to the attached simplified drawings, wherein
- Fig. 1: presents a block diagram of the service process for a digital signature of a document.
- Fig. 2: presents a block diagram of a digital signing event according to the invention, wherein a short video clip of the signatory is recorded, and
- Fig. 3: presents a block diagram according to Fig. 2, to which the verification procedure of the video clip has been added.

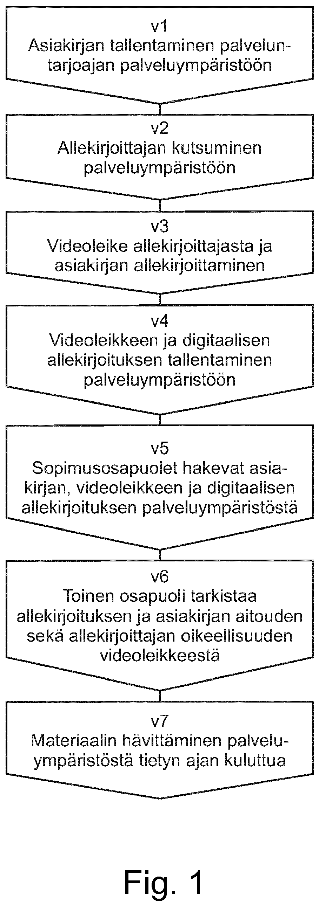

Fig. 1 presents a block diagram of the service process of a digital signature of a document, such as a PDF document, which includes a recording of a short video clip of the signatory, according to the invention, for authenticating the correct identity of this person.

In this embodiment the digital signature service produced by a third party comprises a service environment in which the producer of a document, as a service customer, hereinafter the company, records a document to be electronically signed from a customer of the company, hereinafter signatory, and in which service environment the customer signs the document digitally.

In phase v1 of the service process, the company saves the document to be signed in the service environment of the digital signature service.

In phase v2 of the service process, the company defines the signatory of the document in the service environment and invites him/her to sign the document in the service environment. At its simplest, the signatory is invited by email, which email includes a link to the service environment and to the digital signature of the document.

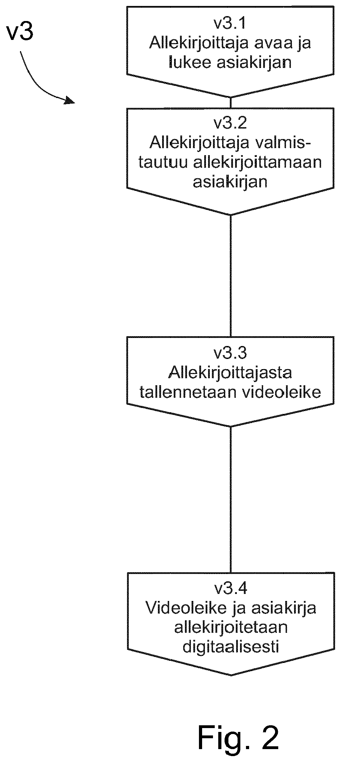

In phase v3 of the service process, the signatory arrives at the service environment where he/she is shown clear instructions about the signing event, a short video clip of him/her is recorded and he/she digitally signs the requested document. This phase v3 is described in more detail hereafter in connection with Figs. 1 and 2.

In phase v4 of the service process, the video clip and digital signature are saved in the service environment. The video clip is saved as its own file and the digital signature can, if necessary, be attached to the document file according to some digital signature technique known in the art.

In phase v5 of the service process, the contracting parties, the company and the signatory, retrieve the document, the video clip file attached to it and the digital signature from the service environment. The retrieving parties are able to log in to the service environment e.g. by means of links or passwords delivered to them, in which case they can download the document, the video clip file attached to it and the digital signature for themselves.

In phase v6 of the service process, one party, i.e. the company, can check the authenticity of the document, as well as the authenticity of a video clip, from the digital signature and, in addition, the company can check from the actual video clip that the signatory was the correct person. Situations in which the signatory disputes that he/she signed a contract often occur. In these cases, a short video clip according to the invention is, however, unambiguous proof of the identity of the signatory.

In phase v7 of the service process, the contracting parties have received a document digitally signed in the service environment and have retrieved for themselves the digitally signed document and the video clip file attached to it. Then, after an agreed period of time, e.g. 60 days, the document, digital signature and video clip are deleted from the service environment.

Fig. 2 presents a block diagram of a digital signing event v3 according to the invention, wherein a short video clip of the signatory is recorded. Phase v3 is one phase of the entire service process for the digital signature of a document according to Fig. 1, the phase comprising the recording of a short video clip of the signatory and the digital signing of the document.

In the digital signing event v3 of the document, firstly in phase v3.1 the signatory opens the document to be signed, such as a PDF document, and reads the document.

In phase v3.2, after having read the document the signatory is instructed to prepare for a recording of a short video clip and for digitally signing the document.

In phase v3.3, when the signatory is ready, he/she starts recording a short video clip, e.g. with a web camera, with the camera of a pad device or with a phone camera. The video clip is saved in the service environment. The application of the service environment checks that the video clip succeeded technically, and after a successful check allows the signatory to continue to the next phase of the document signing process. If the saving of the video clip does not succeed or its quality is not good enough, the video clip saving phase v3.3 is repeated.

In phase v3.4, the signatory continues to the actual digital signature of the video clip and of the document. This digital signature can be done using various methods known in the art for digitally signing a document, such as a PKI method. A "hash" of the contents is extracted from the video clip, which hash is linked to the content of the document being signed and from which its own extract is made afterwards for the digital signature of the document. Various metadata, such as time information and location information, can also be attached to the contents of a video clip. This so-called block chain method links the video recording to the digital signature of exactly this certain document. Linking done in this way ensures that only this genuine video clip and the correct digitally recorded document belong together. If the document or video clip is changed, the hash of the digital signature does not tally with the hash obtained from the document and video recording.

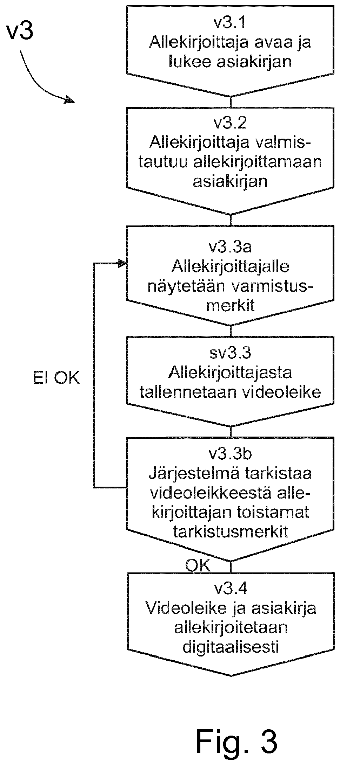

Fig. 3 presents a block diagram according to Fig. 2, in which the verification procedure of the video clip has been added. This verification procedure is an optional function, if additional confirmation that the video recording was made chronologically in connection with the digital signature and that the video recording was not made e.g. in advance of the signing event is desired.

In phase v3.1, the signatory opens the document to be signed, such as a PDF document, and reads the document.

In phase v3.2, after having read the document, the signatory is instructed to prepare for a recording of a short video clip and for digitally signing the document.

In phase v3.3a, an application of the service environment shows the signatory a certain checking sign, which can be e.g. a picture, a word or some number and/or letter code.

In phase v3.3, when the signatory is ready, he/she starts recording a short video clip, e.g. with a web camera, with the camera of a pad device or with a phone camera. The video clip is saved in the service environment. The signatory must repeat for the video clip the checking sign given to him/her earlier. The checking sign is repeated e.g. by speaking or writing and showing the checking sign on the video clip. The application of the service environment checks that the video clip succeeded technically, and after a successful check allows the signatory to continue to the next phase of the document signing process. If the saving of the video clip does not succeed or its quality is not good enough, the video clip saving phase v3.3 is repeated.

In phase v3.3b, the service environment application checks from the video clip that the signatory has correctly repeated the checking sign given to him/her earlier. Depending on what technology the signatory is instructed to use for repeating the checking sign, e.g. prior-art voice recognition methods or methods to identify a shape/character are used in evaluating the correctness of the checking sign. If the checking sign is repeated correctly on the video clip, the signatory is able to continue to the next phase, i.e. the actual digital signature. In other cases, phases v3.3a, v3.3 and v3.3b are performed again until the checking sign is correctly repeated in the video clip.

In phase v3.4, the signatory continues to the actual digital signature of the video clip and of the document.

This digital signature can be done using various methods known in the art for digitally signing a document, such as a PKI method. A "hash" of the contents is extracted from the video clip, which hash is linked to the content of the document being signed and from which its own extract is made afterwards for the digital signature of the document. Various metadata, such as time information and location information, can also be attached to the contents of a video clip. This so-called block chain method links the video recording to the digital signature of exactly this certain document. Linking done in this way ensures that only this genuine video clip and the correct digitally recorded document belong together. If the document or video clip is changed, the hash of the digital signature does not tally with the hash obtained from the document and video recording.

It is obvious to the person skilled in the art that different embodiments of the invention are not limited to the example described above, but that they may be varied within the scope of the claims presented below. What is essential in the invention is that a video clip of the signatory is recorded, with which video clip it can be proved that the signatory was the correct person and linking of the actual digital signature of the document and the video clip can also occur by means of other prior-art digital signature techniques than those presented in the embodiment.

It is also obvious to the person skilled in the art that the method can also be applied elsewhere than in the digital signature service environment of a service provider. The method can be e.g. directly in the company's own use and in its own service environment.

## Claims

1. Digital signature method, wherein a person signing digitally signs a document (v3, v3.4), aided by an information system, **characterized in that** a video clip (v3.3) of the signatory in the signing event is recorded, and **in that** an extract of the contents is made from the video clip, which extract is linked to the content of the document being signed and from which its own extract is made afterwards for the digital signature of the document.

2. Digital signature method according to claim 1, **characterized in that** the video clip is recorded (v3.3) to be brief, preferably of 2 - 4 seconds duration.

3. Digital signature method according to claim 1 or 2, **characterized in that** checking requirements (v3.3a) are determined for the video clip and the digital signature (v3.4) of the document is made only when the checking requirements are fulfilled (v3.3b).

4. Digital signature method according to claim 3, **characterized in that**, as a checking requirement for the recorded video clip (v3.3), the signatory is requested to perform the required checking procedure during the video recording.

5. Digital signature method according to claim 4, **characterized in that** as a checking procedure the signatory is requested during the video recording (v3.3) to repeat the checking sign shown.

6. Digital signature method according to any of the preceding claims, **characterized in that** the recorded video clip (v3.3) is linked to the document and to the digital signature.

7. Digital signature method according to any of the preceding claims, **characterized in that** the document, video clip and digital signature are recorded in the information system (v4) of a service provider.

8. Digital signature method according to any of the preceding claims, **characterized in that** a secure connection is formed for the contracting parties for retrieving the document, video clip and digital signature from the information system (v5) of the service provider.

9. Digital signature method according to any of the preceding claims, **characterized in that** the document, video clip and digital signature are removed from the information system of the service provider after a predetermined period of time has lapsed (v7).
